# EUROPEAN PATENT APPLICATION

(11) **EP 4 691 937 A1**
(43) Date of publication of application: **11.02.2026**
(21) Application number: 24778665.0
(22) Date of filing: 01.02.2024
(51) Int. Cl.: B65D 25/34, B65D 23/00, B65D 25/54, G09F 3/04

(54) **LABELED CONTAINER**

(30) Priority: 29.03.2023 JP 2023054277
(71) Applicant: Fuji Seal International, Inc., Osaka-shi, Osaka 532-0003 (JP)
(72) Inventor: NAKANISHI, Masato, Osaka-shi, Osaka 532-0003 (JP); MIYAZAKI, Akira, Osaka-shi, Osaka 532-0003 (JP)
(74) Representative: Graf von Stosch Patentanwaltsgesellschaft mbH
(86) International application number: PCT/JP2024/003272
(87) International publication number: WO 2024/202519

(57) **Abstract**

A sense of unity between contents visible through a container and a cylindrical heat-shrinkable label is enhanced. A labeled container (100) includes: a container (1) that stores contents and that makes it possible to visually confirm a color of the contents; and a label (2) that is attached to the container (1). The label (2) includes an opening part (20) that opens in a plane of the label (2) and a first region (21) that surrounds the opening part (20). A color of the contents visible through the container (1) is identical to a color of the first region (21).

## Description

### Technical Field

The present disclosure relates to a labeled container to which a cylindrical heat-shrinkable label is attached.

### Background Art

Patent Literature 1 discloses a configuration in which a hole is provided in a cylindrical heat-shrinkable label in order to expose a surface of a container that is at least partially surrounded by the cylindrical heat-shrinkable label.

### Citation List

### [Patent Literature]

[Patent Literature 1]
Pamphlet of International Publication No. WO2020/091977

### Summary of Invention

### Technical Problem

In such a labeled container, in a case where a container that makes it possible to visually confirm a color of contents is used, a sense of unity between the contents visible through the container and a cylindrical heat-shrinkable label is desired to be enhanced.

An object of an aspect of the present disclosure is to achieve a labeled container that makes it possible to enhance a sense of unity between contents visible through a container and a cylindrical heat-shrinkable label.

### Solution to Problem

A labeled container in accordance with an aspect of the present disclosure includes: a container that stores contents and that makes it possible to visually confirm a color of the contents; and a cylindrical heat-shrinkable label that is attached to the container, the cylindrical heat-shrinkable label including an opening part that opens in a plane of the cylindrical heat-shrinkable label and a peripheral region that surrounds the opening part, and a color of the contents visible through the container being identical to a color of the peripheral region.

### Advantageous Effects of Invention

An aspect of the present disclosure makes it possible to enhance a sense of unity between contents visible through a container and a cylindrical heat-shrinkable label.

### Brief Description of Drawings

Fig. 1 is a view illustrating a configuration of a labeled container in accordance with an embodiment of the present disclosure.
Fig. 2 is a cross-sectional view illustrating a configuration of a labeled container in accordance with an embodiment of the present disclosure.
Fig. 3 is a view illustrating a color at or near an opening part of a cylindrical heat-shrinkable label in accordance with an embodiment of the present disclosure.
Fig. 4 is a cross-sectional view illustrating a configuration of a cylindrical heat-shrinkable label in accordance with an embodiment of the present disclosure.

### Description of Embodiments

### [Embodiments]

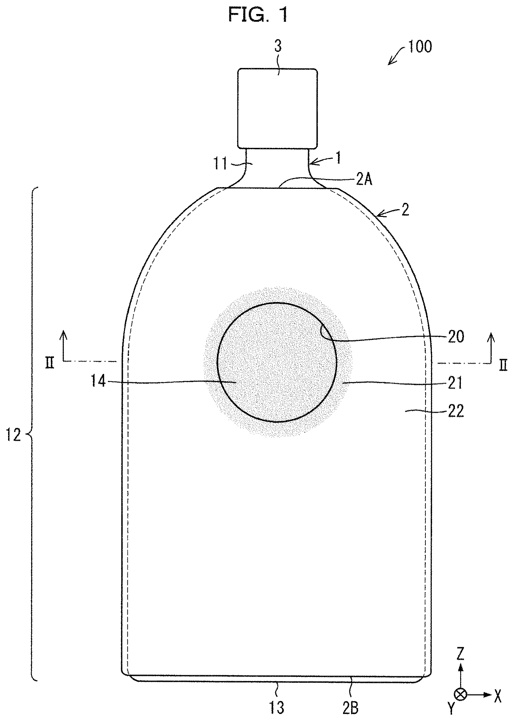

An embodiment of the present disclosure will be described below in detail. In the following description, a numerical range "A to B" means "not less than A and not more than B". The drawings show coordinate axes, which are an X-axis, a Y-axis, and a Z-axis that are orthogonal to each other. In these coordinate axes, a height direction of a container 1 is a Z-axis direction, and two directions that are orthogonal to each other in a plane which is orthogonal to the Z-axis are an X-axis direction and a Y-axis direction. Further, a longitudinal direction defined below is the Z-axis direction in Fig. 1, and a transverse direction defined below is a circumferential direction of a labeled container 100 in Fig. 1. Furthermore, sizes of members in the drawings do not match their actual sizes.

Fig. 1 is a view illustrating a configuration of the labeled container 100 in accordance with the present embodiment. As illustrated in Fig. 1, the labeled container 100 includes a container 1, a label (cylindrical heat-shrinkable label) 2, and a cap 3.

### (Container 1)

The container 1 includes a neck part 11, a body part 12, and a bottom part 13. Contents accommodated in the container 1 may be, for example, a liquid detergent. Note, however, that the contents are not limited to a liquid detergent but may be a liquid, powder, or the like other than the liquid detergent.

The neck part 11 extends from the body part 12 and has a pouring port 11A at an end part thereof. The contents of the container 1 are accommodated in the container 1 via the pouring port 11A and poured out through the pouring port 11A when used. The pouring port 11A is sealed with the cap 3.

The body part 12, together with the bottom part 13, defines a space in which the contents accommodated in the container 1 can be stored. In Fig. 1, the body part 12 is cylindrical and has, at or near the neck part 11, a diameter that is reduced in accordance with a diameter of the neck part 11. The bottom part 13 has a shape parallel to an X-Y plane. Note, however, that shapes of the neck part 11, the body part 12, and the bottom part 13 are not limited to those illustrated in Fig. 1, provided that the shapes allow the contents to be accommodated in the container 1.

The container 1 is light-transmissive or transparent. The container 1 may be transparent or translucent and need only transmit visible light enough for a color of the contents to be reflected in an appearance of the container 1 through the container 1. The wording "the color of the contents is reflected in the appearance of the container 1" means that the color of the contents can be externally visually confirmed almost as it is or in a state in which the contents are seen through the container 1, so that the color of the contents are affected by a color of the container 1.

A material of the container 1 is not particularly limited, provided that the material is light-transmissive or transparent. The material is, for example, a synthetic resin or glass. The container 1 that is formed from a synthetic resin may be formed from a single resin. A single resin is preferably a polyolefin-based resin or a polyester-based resin, more preferably a polyethylene-based resin, a polypropylene-based resin, or a polyethylene terephthalate-based resin, and particularly preferably polyethylene, polypropylene, or polyethylene terephthalate. Using such a single resin as the material of the container 1 makes it possible to recycle the container 1. Thus, it is preferable to use the single resin in order to reduce an environmental load. Such an effect also contributes to achievement of, for example, Goal 12 "Ensure sustainable production and consumption patterns" of the Sustainable Development Goals (SDGs) proposed by the United Nations.

The color of the contents is preferably reflected in the appearance of the container 1 as it is. Thus, the container 1 preferably does not contain a coloring component. Depending on the material used, the material itself may be cloudy and light-transmissive. However, the container 1 is preferably colorless and transparent. Thus, the container 1 is most preferably formed with use of a colorless and transparent material. Note, however, that the container 1 may contain a coloring component in a case where coloration of the appearance of the container 1 is intended to be adjusted by mixing the color of the contents with a color of the container 1 itself.

A thickness of the container 1 is not particularly limited and may be set as appropriate in accordance with a size or use of the container 1. The container 1 that is made of a synthetic resin has a thickness of, for example, 0.1 mm to 3 mm.

### (Label 2)

The label 2 is a cylindrical label that opens at a first end part 2A and a second end part 2B, and is attached so as to cover an outer side of the body part 12. In Fig. 1, the label 2 is cylindrical. Note, however, that a shape of the label 2 is not limited to a cylindrical shape, provided that the shape allows the label 2 to be attached to the container 1 in a cylindrical shape. Further, for example, information pertaining to the contents may be described in the label 2.

The label 2 is a so-called shrink label that has heat-shrinkable properties. A configuration and a material of the label 2 will be described later.

The label 2 includes an opening part 20, a first region (peripheral region) 21 surrounding the opening part 20, and a second region 22 located further outside the first region (peripheral region) 21.

The opening part 20 is an opening formed in a plane of the label 2. The opening part 20 exposes a part of the body part 12. The part of the body part 12 which part is exposed by the opening part 20 is referred to as an exposed part 14. The container 1 is light-transmissive or transparent. This allows the appearance in which the color of the contents is reflected to be visually confirmed in the exposed part 14.

The opening part 20 can be disposed at any position in the plane of the label 2. For example, the opening part 20 may be disposed at or near the neck part 11, at or near the bottom part 13, or at a plurality of positions. The opening part 20 may have any shape. For example, in Fig. 1, the opening part 20 has a circular shape, but the shape of the opening part 20 is not limited to the circular shape. For example, the shape of the opening part 20 may be elliptical or quadrangular, or may have design properties.

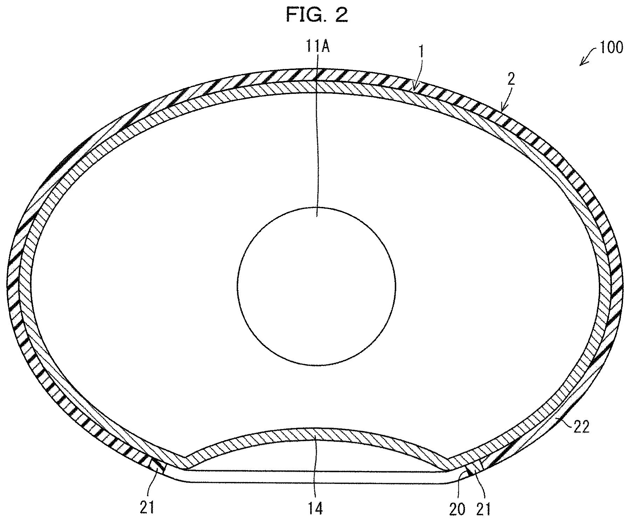

Fig. 2 is a cross-sectional view of the labeled container 100, taken along the line II-II in Fig. 1. As illustrated in Fig. 2, the exposed part 14 of the container 1 may be formed from a recess of the container 1 and an outer peripheral region thereof (recess outer peripheral region). In this case, the exposed part 14 includes the recess of the container 1 and the recess outer peripheral region. A shape of the recess of the container 1 in the exposed part 14 is not particularly limited. The recess may be a through hole, may be a protrusion, or may be a collection of a plurality of recesses or protrusions. The recess or the through hole preferably has a shape that brings about an effect of making it easy for a user to hold the container.

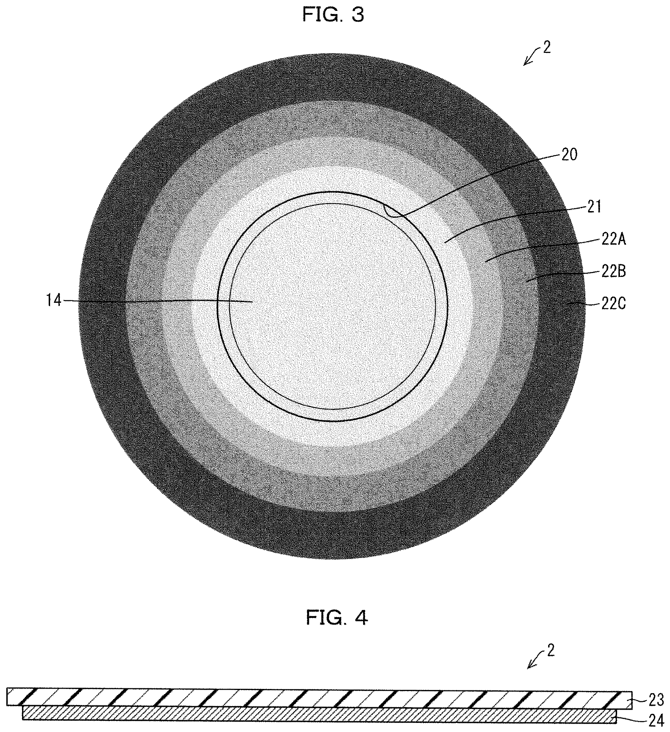

Fig. 3 is a view illustrating a color at or near the opening part 20 in the label 2. As illustrated in Fig. 3, the first region 21 is a band-shaped region that is formed so as to surround the opening part 20. The first region 21 may be an annular band-shaped region having a predetermined width. In the example illustrated in Fig. 3, the first region 21 is formed so as to include an edge of the opening part 20.

In a case where the edge of the opening part 20 is made colorless and transparent, the first region 21 may be positioned outside the colorless and transparent edge. The first region 21 has a width of, for example, 1 mm to 20 mm from the edge of the opening part 20. In a case where a transparent region that is colorless and transparent is provided at the edge of the opening part 20, the width of the first region 21 is 1 mm to 20 mm from an outside of an end of the transparent region.

The second region 22 is a band-shaped region outside the first region 21 surrounding the opening part 20. The second region 22 may be an annular band-shaped region having a predetermined width. The second region 22 is adjacent to the first region 21 so as to surround the first region 21. The label 2 need not be divided into two regions, which are the first region 21 and the second region 22, but may include other region(s) such as a third region and/or a fourth region. For convenience of description, a region at or near the outside of the first region 21 is merely referred to as the second region 22. Further, a character, a figure, a pattern, and the like may be superimposed and displayed in the first region 21 and the second region 22. Furthermore, specific color background printing may be performed on the second region 22. Printing of a design or trademark, and/or design indication such as product labeling required by law may be carried out with respect to such background printing. Colors of the character, the figure, the pattern, and the like are not particularly limited.

The first region 21 has a color identical to the color of the contents visible through the container 1 in the exposed part 14. For example, in a case where the container 1 is colorless and transparent, the color of the contents is identical to the color of the first region 21. In a case where the container 1 is whitish and translucent, a color obtained by mixing the color of the contents with a white color of the container 1 is identical to the color of the first region 21. The color of the contents visible through the container 1 in the exposed part 14 is preferably identical to a color of at least a region adjacent to the first region 21. In this case, the region adjacent to the first region 21 in Fig. 2 is the recess outer peripheral region.

Assume a case where the labeled container 100 illustrated in Fig. 1 is filled with the contents and is self-standing at the bottom part 13. In a case where a liquid level of the contents is located above the opening part 20 (in the Z-axis direction), the color of the contents visible through the container 1 can be visually confirmed from the entire exposed part 14. This makes it possible to enhance a sense of unity between the color of the contents visible through the container 1 and the entire label 2. Further, for example, in a case where the liquid level of the contents is positioned inside the opening part 20 or a case where the liquid level of the contents is positioned below the opening part 20, a visual change occurs in the labeled container 100 as the contents are used. Thus, since an atmosphere of the appearance changes in accordance with a filling state of the contents, the labeled container 100 has excellent design properties. As a secondary effect, a remaining amount of the contents can be easily determined and managed in a case where the liquid level of the contents is viewable.

Whether the color of the first region 21 is identical to the color of the contents visible through the container 1 (hereinafter, simply referred to as "the color of the contents") in the exposed part 14 is determined for example, as follows. An image of the container 1 is captured in a state where the label 2 is attached to the container 1, and a color difference in the captured image between a site corresponding to the color of the contents and a position corresponding to the first region 21 is measured. The color of the first region 21 and the color of the contents may be measured by a spectrophotometer or a color-difference meter in accordance with color values L*, a*, and b*. L* represents lightness, and a* and b* each represent chromaticity. The measured difference between the color of the first region 21 and the color of the contents is ΔE. This difference is calculated with use of the values L*, a*, and b* by the following equation: ΔE=[(L*_{X}-L*_{Y})²+(a*_{X}-a*_{Y})²+(b*_{X}-b*_{Y})²]^{1/2}. L*_{X} in the equation indicates the color of the first region 21, and L*y in the equation indicates the color of the contents. ΔE having a smaller value makes it impossible to easily distinguish between the above two colors. Thus, ΔE preferably has a smaller value. The color difference ΔE in the present disclosure is preferably ≤ 5.0, more preferably ≤ 4.0, and even more preferably ≤ 3.0.

Further, in the region adjacent to the first region 21, which is the peripheral region surrounding the opening part 20, a color of the label 2 may continuously change as a distance from the first region 21 increases. Specifically, a color of the second region 22 may continuously change as a distance from a side adjacent to the first region 21 increases, that is, as a distance from the opening part 20 increases. That is, the color of the second region 22 may have a gradation. In a case where the color of the second region 22 has a gradation, the second region 22 has a width of, for example, 5 mm to 20 mm. In the example illustrated in Fig. 3, the second region 22 includes a second region 22A, a second region 22B, and a second region 22C. In this case, the color of the label 2 continuously changes from the second region 22A to the second region 22C.

The number of stages in which the color of the second region 22 changes need only be set as appropriate. Further, the color of the second region 22 may be continuously changed in a stepless manner. A color change in the second region 22 may be a change in shade (lightness) of a color, or may be a change in hue or chroma. Furthermore, an amount of ink used to print the second region 22 may be continuously changed. More specifically, assume, for example, a case where one specific color is used to print second region 22. As a method for printing the second region 22, a process color may be used in which inks of a plurality of colors are multiplied to form a specific color. However, an ink of one specific color is preferably used to represent the second region 22. In a case where one specific color is used to continuously change the second region 22, a method of changing a thickness of an ink layer and a method of changing an ink application area are considered. For example, in a case where gravure printing is used to carry out printing, a gradation of the second region 22 may be formed by changing an ink dot thickness and/or an ink dot density. A greater dot thickness or a higher dot density results in a darker color. A smaller dot thickness or a lower dot density results in a lighter color. It is preferable that, by continuously changing the amount of ink, the color of the second region 22 be continuously changed to be lighter or darker as a distance from the first region 21 increases, that is, from the second region 22A to the second region 22C. In this case, it is preferable that inks used for the first region 21 and the second region 22 have similar colors. Further, forming a gradation from the first region 21 to the second region 22 makes it possible to obtain a sense of unity with the labeled container 100, and thus is more preferable.

In a case where the color of the second region 22 continuously changes, the color of the label 2 is preferably such that, in a case where a total area of the label 2 excluding the design indication is 100%, almost all the label 2, specifically, at least 70% of a region of the label 2 other than the first region 21 has a background color (the color of the second region 22). Such a configuration makes a boundary between the first region 21 and the other region inconspicuous, and the gradation in the first region 21 can be made conspicuous while the entire label 2 has a background of a specific color with a sense of unity.

A part of the second region 22 on the side adjacent to the first region 21, that is, the second region 22A has a color close to the color of the first region 21. A boundary between the first region 21 and the second region 22A need not be clear. A color of each of the regions is preferably set so as to continuously change from the first region 21 to the second region 22C. Assume, for example, a case where the color of the contents visible through the container 1 in the exposed part 14 and the color of the first region 21 are white and the color of the second region 22 is yellowish. In this case, it is only necessary that the color of the second region 22A have a slightly yellowish white color and gradually become yellow from the second region 22B toward the second region 22C, that is, as a distance from the opening part 20 increases.

With this configuration, even in a case where the color of the contents visible in the exposed part 14 differs from the color of the second region 22, a sense of unity between the exposed part 14 and the second region 22 can be created via a part having a gradation. This makes it possible to enhance a sense of unity between the color of the contents visible through the container 1 and the entire label 2.

### (Method for forming opening part 20)

Examples of a method for forming the opening part 20 include a method in which the label 2 is cut with use of a laser so as to correspond to the shape of the opening part 20. A type of the laser used to form the opening part 20 is not particularly limited, provided that the label 2 can be cut, and examples thereof include a carbon dioxide laser, a YAG laser, and a YVO₄ laser.

By moving the laser, a cutting line is formed in the plane of the label 2 in accordance with a movement trajectory of the laser. Such an opening method makes it possible to freely change the movement trajectory of the laser. Thus, the opening part 20 having a desired shape can be easily formed at a desired position in the label 2.

Further, using the laser makes it possible to cut the label 2 without fail. Thus, a region cut by the laser is separated from the label 2 without fail. Further, the opening part 20 has a beautiful edge part. Since cutting with the laser involves heat, the opening part 20 (laser-cut cutting part) melts and solidifies, and is thicker than the label 2. The opening part 20 may be formed in a state in which the label 2 that has not been attached to the container 1 is spread in a planar shape, or may be formed after the label 2 is attached to the container 1. The opening part 20 that is formed after the label 2 is attached to the container 1 is preferable because a sense of unity between a cross section of the opening part 20 and the container 1 is enhanced.

A method of cutting the label 2 is not limited to the laser, provided that the label 2 can be cut into a desired shape. The opening part 20 may be formed with use of a cutting tool.

### (Configuration and material of cylindrical heat-shrinkable label)

Fig. 4 is a cross-sectional view illustrating a configuration of the label 2. The label 2 includes a heat-shrinkable film layer 23 and a printed layer 24. In general, the label 2 is disposed so that, when the label 2 is attached to the container 1, the heat-shrinkable film layer 23 and the printed layer 24 are positioned on an outer side and an inner side, respectively, of the label.

The heat-shrinkable film layer 23 is a layer that is flexible and that includes a film which shrinks in a heat shrinkage direction when heated to a heat shrinkage temperature. The shrinkage temperature is, for example, 60°C to 120°C. Further, the heat-shrinkable film layer 23 is preferably a transparent film that substantially does not contain an inorganic pigment, and is more preferably colorless and transparent.

A thickness of the heat-shrinkable film layer 23 is not particularly limited. It is possible to use the heat-shrinkable film layer 23 that has a thickness of, for example, approximately 10 µm to 100 µm, and further approximately 15 µm to 80 µm.

In terms of thermal properties, the heat-shrinkable film layer 23 may be a film that thermally shrinks mainly in at least the transverse direction (a circumferential direction of the label in Fig. 1), and further may be a film that thermally changes in the longitudinal direction (the Z-axis direction in Fig. 1) may be used. In other words, the heat-shrinkable film layer 23 can be a uniaxially or biaxially oriented film that is stretched mainly in the transverse direction.

A heat shrinkage rate of the heat-shrinkable film layer 23 in the transverse direction is not particularly limited. For example, the heat shrinkage rate under immersion in hot water at 90°C for 10 seconds is not less than 40%, and preferably not less than 50%. The heat shrinkage rate in the transverse direction is preferably higher, but is ordinarily not more than 85%.

The heat shrinkage rate of the heat-shrinkable film layer 23 in the longitudinal direction is not particularly limited. For example, the heat shrinkage rate under immersion in hot water at 90°C for 10 seconds is not less than 1%, and preferably not less than 5%. A too high heat shrinkage rate in the longitudinal direction may cause a wrinkle and/or a reduction in length in the longitudinal axis direction. Thus, the heat shrinkage rate under immersion in hot water at 90°C for 10 seconds is preferably not more than 40%, and more preferably not more than 20%.

A material of the heat-shrinkable film layer 23 is not particularly limited. Preferable examples of the material include a heat-shrinkable synthetic resin film, heat-shrinkable nonwoven fabric, a heat-shrinkable foam resin film, and a film obtained by laminating these. More preferable examples of the material include: one selected from polyester-based resins (such as polyethylene terephthalate and polylactic acid), polyolefin-based resins (such as polyethylene, polypropylene and cyclic olefin), polystyrene-based resins (such as polystyrene and a styrene-butadiene copolymer), polyamide-based resins, and thermoplastic resins (such as a vinyl chloride-based resin); and mixtures of two or more of these resins. Further, the heat-shrinkable film layer 23 may be made of a multilayer film formed by one or more types of layers. The multilayer film can be, for example, a film in which a layer of a polyester-based resin and a layer of a polystyrene-based resin are laminated. In terms of a large amount of laser absorption and achievement of easy laser cutting, the heat-shrinkable film layer 23 is most preferably a heat-shrinkable film that contains a polyester-based resin and/or a polystyrene-based resin as a main component.

The printed layer 24 is a printed layer in which indication of a desired color, a pattern, characters, a figure, and/or the like is represented with one or more colors. The first region 21 and the second region 22 are represented by the printed layer 24. The printed layer 24 can be formed by a gravure printing method or the like with use of color ink conventionally known in the art. The printed layer 24 has a thickness of, for example, 0.1 µm to 15 µm.

The printed layer 24 need only be provided at least in the first region 21 and the second region 22 around the first region 21, and need not be provided to an entire surface of the heat-shrinkable film layer 23.

The printed layer 24 may be composed of a plurality of layers. For example, the printed layer 24 may be composed of a design layer that has a design, an underlayer that has a base, and a slip layer that has a slip surface for improving slipperiness between the container 1 and the label 2. In this case, the first region 21 and the second region 22 are represented by the design layer. Further, a surface medium or the like may be printed on a side (front side of the label 2) of the heat-shrinkable film layer 23 opposite from the printed layer 24. The surface medium mainly has a function of protecting a front-side surface of the label 2.

### (Attachment method)

As a method for attaching the label 2 to the container 1, it is possible to employ a method in which the label 2 is externally mounted to an outside of the container 1 and heated so that the label 2 is thermally shrunk and attached to the container 1. For example, the label 2 that has been formed in a cylindrical shape in advance is laid outside a site of the container 1 to which site the label 2 is to be attached. Next, the label 2 is heated so as to have a reduced diameter, and is attached to the container 1 by closely adhering to the container 1. As an attachment method, an attachment method known in the art can be mainly used. It is possible to use not only a method in which a label is formed into a cylindrical shape in advance, but also a method (ROSO method) in which a label is wound around a container in a cylindrical shape and shrunk.

The present invention is not limited to the embodiments, but can be altered by a skilled person in the art within the scope of the claims. The present invention also encompasses, in its technical scope, any embodiment derived by combining technical means disclosed in differing embodiments.

Aspects of the present invention can also be expressed as follows:
A labeled container in accordance with a first aspect of the present invention includes: a container that stores contents and that makes it possible to visually confirm a color of the contents; and a cylindrical heat-shrinkable label that is attached to the container, the cylindrical heat-shrinkable label including an opening part that opens in a plane of the cylindrical heat-shrinkable label and a peripheral region that surrounds the opening part, and a color of the contents visible through the container being identical to a color of the peripheral region.

In a second aspect of the present invention, a labeled container may be configured such that, in the first aspect, a color of the cylindrical heat-shrinkable label continuously changes between the peripheral region and a region other than the peripheral region.

In a third aspect of the present invention, a labeled container may be configured such that, in the first and second aspects, the labeled container is recyclable.

### Reference Signs List

100 Labeled container
1 Container
2 Label
3 Cap
11 Neck part
12 Body part
13 Bottom part
14 Exposed part
20 Opening part
21 First region (peripheral region)
22 Second region
23 Heat-shrinkable film layer
24 Printed layer
2A First end part
2B Second end part
11A Pouring port

## Claims

1. A labeled container comprising: a container that stores contents and that makes it possible to visually confirm a color of the contents; and a cylindrical heat-shrinkable label that is attached to the container,
the cylindrical heat-shrinkable label including an opening part that opens in a plane of the cylindrical heat-shrinkable label and a peripheral region that surrounds the opening part, and
a color of the contents visible through the container being identical to a color of the peripheral region.

2. The labeled container as set forth in claim 1, wherein, in a region adjacent to the peripheral region, a color of the cylindrical heat-shrinkable label continuously changes as a distance from the peripheral region increases.

3. The labeled container as set forth in claim 1 or 2, wherein the container is recyclable.
